(19)

**Europäisches Patentamt**
**European Patent Office**
**Office européen des brevets**

(11) **EP 3 868 823 A2**

(12) **EUROPEAN PATENT APPLICATION**

(43) Date of publication:
25.08.2021 Bulletin 2021/34

(51) Int Cl.:
*C08L 9/06* (2006.01)   *C08K 3/36* (2006.01)
*C08L 21/00* (2006.01)

(21) Application number: 21153686.7

(22) Date of filing: 27.01.2021

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 21.02.2020  JP 2020028259

(71) Applicant: **Sumitomo Rubber Industries, Ltd.**
**Kobe-shi, Hyogo 651-0072 (JP)**

(72) Inventor: **MIKI, Naoyuki**
**Kobe-shi,, Hyogo 651-0072 (JP)**

(74) Representative: **TBK**
**Bavariaring 4-6**
**80336 München (DE)**

(54) **RUBBER COMPOSITION AND TIRE**

(57)   The present invention provides rubber compositions which provide improved abrasion resistance, and tires including the rubber compositions. Provided are rubber compositions containing a rubber component, a thermoplastic elastomer containing a non-conjugated olefin unit, and a silica having a cetyltrimethylammonium bromide adsorption specific surface area of 180 $m^2$/g or more.

EP 3 868 823 A2

**Description**

TECHNICAL FIELD

The present invention relates to rubber compositions and tires.

BACKGROUND ART

Patent Literature 1 proposes a technique involving the use of a hydrogenated diene polymer to improve the properties such as abrasion resistance of tires. However, in recent years, it has become desirable to further improve abrasion resistance.

CITATION LIST

PATENT LITERATURE

Patent Literature 1: JP H2-147647 A

SUMMARY OF INVENTION

TECHNICAL PROBLEM

The present invention aims to solve the above problem and provide rubber compositions which provide improved abrasion resistance, and tires including the rubber compositions.

SOLUTION TO PROBLEM

The present invention relates to rubber compositions, containing: a rubber component; a thermoplastic elastomer containing a non-conjugated olefin unit; and a silica having a cetyltrimethylammonium bromide adsorption specific surface area of 180 $m^2$/g or more.

Preferably, the rubber component and the thermoplastic elastomer each contain an aromatic vinyl unit, and aromatic vinyl unit contents of the rubber component and the thermoplastic elastomer satisfy the following relationship:

Aromatic vinyl unit content of rubber component > Aromatic vinyl unit content of thermoplastic elastomer.

Preferably, the rubber component includes polybutadiene rubber and an aromatic vinyl-containing rubber which contains an aromatic vinyl unit, and the aromatic vinyl-containing rubber, the polybutadiene rubber, and the thermoplastic elastomer are present in each of the rubber compositions in respective amounts satisfying the following relationship:

Amount of aromatic vinyl-containing rubber > Amount of polybutadiene rubber > Amount of thermoplastic elastomer.

Preferably, the aromatic vinyl-containing rubber contains a non-conjugated olefin unit.

Preferably, the aromatic vinyl-containing rubber has an aromatic vinyl unit content of 35% by mass or higher.

Preferably, the aromatic vinyl unit is a styrene unit.

Preferably, the rubber compositions further contain an aromatic ring-containing resin component which contains an aromatic ring structure, and aromatic ring structure contents of the aromatic ring-containing resin component, the rubber component, and the thermoplastic elastomer satisfy the following relationship:

Aromatic ring structure content of aromatic ring-containing resin component > Aromatic ring structure content of rubber component > Aromatic ring structure content of thermoplastic elastomer.

Preferably, the rubber compositions further contain a plasticizer, and the plasticizer and the thermoplastic elastomer are present in each of the rubber compositions in respective amounts satisfying the following relationship:

Amount of plasticizer > Amount of thermoplastic elastomer.

The present invention also relates to tires, including the rubber compositions.

ADVANTAGEOUS EFFECTS OF INVENTION

The present invention provides rubber compositions containing a rubber component, a thermoplastic elastomer containing a non-conjugated olefin unit, and a silica having a cetyltrimethylammonium bromide adsorption specific surface area of 180 $m^2$/g or more. Such rubber compositions provide excellent abrasion resistance.

DESCRIPTION OF EMBODIMENTS

The rubber compositions of the present invention contain a rubber component, a thermoplastic elastomer containing a non-conjugated olefin unit, and a silica having a cetyltrimethylammonium bromide adsorption specific surface area of 180 $m^2$/g or more.

The above-described effect of the rubber compositions may be due to the following mechanism.

The thermoplastic elastomer, into which fillers such as silica will usually not be introduced, may form a flexible phase in the rubber compositions. The flexible phase relaxes stress concentration in the rubber compositions.

Moreover, by the use of the silica (fine particle silica) having a cetyltrimethylammonium bromide (CTAB) adsorption specific surface area of 180 $m^2$/g or more, the interface (interaction) between the rubber component and silica is increased so that the silica-containing rubber phase becomes more rigid. On the other hand, the thermoplastic elastomer phase remains flexible, and therefore the rubber compositions include a mixture of rigid and flexible phases. This further relaxes the above-described stress concentration. Thus, it is believed that the tensile strength of the rubber matrix is significantly enhanced, resulting in excellent abrasion resistance.

Moreover, the rubber compositions are expected to provide improved wet grip performance due to the fine particle silica.

The rubber component contained in the rubber compositions includes a rubber or rubbers that is/are usually solid at room temperature (25°C). Examples include diene rubbers such as isoprene-based rubbers, polybutadiene rubber (BR), styrene-butadiene rubber (SBR), and styreneisoprene-butadiene rubber (SIBR), and hydrogenated products of the foregoing rubbers. Examples of the isoprene-based rubbers include natural rubber (NR), polyisoprene rubber (IR), refined NR, modified NR, and modified IR. These may be used alone or in combinations of two or more.

From the standpoint of properties such as abrasion resistance, the rubber component preferably contains an aromatic vinyl unit. In other words, the rubber component preferably includes a rubber containing an aromatic vinyl unit (aromatic vinyl-containing rubber) such as SBR or SIBR.

The term "aromatic vinyl unit" refers to a structural unit derived from an aromatic vinyl compound. Examples of the aromatic vinyl compound include styrene, α-methylstyrene, 1-vinylnaphthalene, 3-vinyltoluene, ethylvinylbenzene, divinylbenzene, 4-cyclohexylstyrene, and 2,4,6-trimethylstyrene. These may be used alone or in combinations of two or more. Styrene or α-methylstyrene is preferred, and styrene is more preferred. In other words, the aromatic vinyl unit is preferably a styrene unit.

The aromatic vinyl unit content of the aromatic vinyl-containing rubber is preferably 15% by mass or higher, more preferably 25% by mass or higher, still more preferably 30% by mass or higher, particularly preferably 35% by mass or higher, but is preferably 60% by mass or lower, more preferably 50% by mass or lower, still more preferably 40% by mass or lower. When the aromatic vinyl unit content is within the range indicated above, the advantageous effect tends to be better achieved.

From the standpoint of properties such as abrasion resistance, the aromatic vinyl-containing rubber preferably contains a conjugated diene unit.

The term "conjugated diene unit" refers to a structural unit derived from a conjugated diene compound. Examples of the conjugated diene compound include 1,3-butadiene, isoprene, 1,3-pentadiene, 2,3-dimethylbutadiene, 2-phenyl-1,3-butadiene, and 1,3-hexadiene. These may be used alone or in combinations of two or more. Preferred is 1,3-butadiene or isoprene, with 1,3-butadiene being more preferred.

From the standpoint of resistance to low-temperature embrittlement, the conjugated diene unit content of the aromatic vinyl-containing rubber is preferably 60% by mass or higher, more preferably 75% by mass or higher, still more preferably 80% by mass or higher, particularly preferably 85% by mass or higher, while from the standpoint of wet grip performance, it is also preferably 85% by mass or lower, more preferably 80% by mass or lower, still more preferably 75% by mass or lower, particularly preferably 65% by mass or lower.

When the aromatic vinyl-containing rubber contains a non-conjugated olefin unit, the conjugated diene unit content is preferably 40% by mass or lower, more preferably 20% by mass or lower, from the standpoint of abrasion resistance. The lower limit is not limited.

From the standpoint of properties such as abrasion resistance, the aromatic vinyl-containing rubber preferably contains a non-conjugated olefin unit.

The term "non-conjugated olefin unit" refers to a structural unit derived from a non-conjugated olefin. Examples of the non-conjugated olefin include ethylene, propylene, 1-butene, 3-methyl-1-butene, 1-pentene, 1-hexene, 1-heptene, and 1-octene. These may be used alone or in combinations of two or more. Ethylene, 1-butene, or 3-methyl-1-butene is preferred, and ethylene is more preferred.

From the standpoint of abrasion resistance, the non-conjugated olefin unit content of the aromatic vinyl-containing rubber is preferably 30% by mass or higher, more preferably 50% by mass or higher, while from the standpoint of processability, it is preferably 80% by mass or lower, more preferably 70% by mass or lower.

The aromatic vinyl unit content, the conjugated diene unit content, and the non-conjugated olefin unit content may be calculated from the results of $^1$H-NMR analysis.

The non-conjugated olefin unit in the aromatic vinyl-containing rubber may be produced by polymerizing a non-conjugated olefin such as ethylene, or by polymerizing a conjugated diene compound such as 1,3-butadiene and hydrogenating the resulting conjugated diene unit. In other words, the aromatic vinyl-containing rubber containing a non-conjugated olefin unit may be a copolymer of monomers including a non-conjugated olefin and an aromatic vinyl compound, or a hydrogenated product of a copolymer of monomers including a conjugated diene compound and an aromatic vinyl compound (hydrogenated copolymer). The hydrogenated copolymer may be a random copolymer or a block copolymer, preferably a random copolymer.

When the aromatic vinyl-containing rubber is the hydrogenated copolymer, the degree of hydrogenation thereof is, from the standpoint of abrasion resistance, preferably 50 mol% or higher, more preferably 60 mol% or higher, still more preferably 70 mol% or higher, while from the standpoint of processability, it is preferably 98 mol% or lower, more preferably 95 mol% or lower, still more preferably 90 mol% or lower, based on the total amount of conjugated diene units before hydrogenation taken as 100 mol%.

The degree of hydrogenation may be calculated from the rate of decrease in the unsaturated bond signals in the $^1$H-NMR spectrum.

The rubber component may include a modified rubber. The use of a modified rubber increases the polarity of the rubber phase so that the dispersibility of silica in the rubber phase can be improved.

The modified rubber may be any rubber having a functional group interactive with a filler such as silica. For example, it may be a chain end-modified rubber obtained by modifying at least one chain end of a rubber with a compound (modifier) having the functional group (i.e., a chain end-modified rubber terminated with the functional group); a backbone-modified rubber having the functional group in the backbone; a backbone- and chain end-modified rubber having the functional group in both the backbone and chain end (e.g., a backbone- and chain end-modified rubber in which the backbone has the functional group and at least one chain end is modified with the modifier); or a chain end-modified rubber that has been modified (coupled) with a polyfunctional compound having two or more epoxy groups in the molecule so that a hydroxy or epoxy group is introduced. Moreover, it may also be one obtained by modifying the above-mentioned hydrogenated copolymer.

Examples of the functional group include amino, amide, silyl, alkoxysilyl, isocyanate, imino, imidazole, urea, ether, carbonyl, oxycarbonyl, mercapto, sulfide, disulfide, sulfonyl, sulfinyl, thiocarbonyl, ammonium, imide, hydrazo, azo, diazo, carboxyl, nitrile, pyridyl, alkoxy, hydroxy, oxy, and epoxy groups. These functional groups may have a substituent. Amino groups (preferably amino groups whose hydrogen atom is replaced with a C1-C6 alkyl group), alkoxy groups (preferably C1-C6 alkoxy groups), and alkoxysilyl groups (preferably C1-C6 alkoxysilyl groups) are preferred among these.

Specific examples of the compound (modifier) having the functional group include 2-dimethylaminoethyl-trimethoxysilane, 3-dimethylaminopropyltrimethoxysilane, 2-dimethylaminoethyltriethoxysilane, 3-dimethylaminopropyl-triethoxysilane, 2-diethylaminoethyltrimethoxysilane, 3-diethylaminopropyltrimethoxysilane, 2-diethylaminoethyl-triethoxysilane, and 3-diethylaminopropyltriethoxysilane.

From the standpoint of properties such as abrasion resistance, the rubber component preferably includes a combination of an aromatic vinyl-containing rubber (preferably SBR) and BR.

The SBR may be commercially available from Sumitomo Chemical Co., Ltd., JSR Corporation, Asahi Kasei Corporation, Zeon Corporation, etc. The BR may be commercially available from Ube Industries, Ltd., JSR Corporation, Asahi Kasei Corporation, Zeon Corporation, etc.

From the standpoint of wet grip performance, the amount of the aromatic vinyl-containing rubber based on 100% by mass of the rubber component is preferably 30% by mass or more, more preferably 40% by mass or more, still more preferably 50% by mass or more. The upper limit is not limited and the amount may be 100% by mass, but is preferably 80% by mass or less, more preferably 70% by mass or less.

From the standpoints of crack growth resistance and abrasion resistance, the amount of the BR based on 100% by mass of the rubber component is preferably 5% by mass or more, more preferably 10% by mass or more, still more preferably 20% by mass or more, particularly preferably 30% by mass or more, but is preferably 60% by mass or less, more preferably 50% by mass or less, still more preferably 40% by mass or less.

The rubber compositions contain a thermoplastic elastomer containing a non-conjugated olefin unit.

The term "thermoplastic elastomer" refers to a copolymer (block copolymer) which includes a hard segment serving as a crosslinking point and a soft segment imparting rubber elasticity and which is usually solid at room temperature (25°C).

Examples of the hard segment include polystyrene, polypropylene, polyester, polyamide, poly(vinyl chloride), and polyurethane. Examples of the soft segment include vinyl-polydiene, polyisoprene, polybutadiene, polyethylene, polychloroprene, and poly(2,3-dimethylbutadiene). One of these may be used, or two or more of these may be used in combination.

The thermoplastic elastomer contains a non-conjugated olefin unit. Owing to the presence of a non-conjugated olefin unit in the thermoplastic elastomer, the polarity of the thermoplastic elastomer is reduced, so that silica is less likely to be incorporated into the thermoplastic elastomer phase, and at the same time the thermoplastic elastomer phase is more likely to separate from the rubber phase because the difference in polarity between the thermoplastic elastomer phase and the rubber phase is increased. Therefore, it is believed that stress concentration is relaxed, resulting in good abrasion resistance.

The non-conjugated olefin corresponding to the non-conjugated olefin unit is as described above for the rubber component. Ethylene, 1-butene, or 3-methyl-1-butene is preferred, and ethylene is more preferred.

The non-conjugated olefin unit in the thermoplastic elastomer may be produced by polymerizing a non-conjugated olefin such as ethylene, or by polymerizing a conjugated diene compound such as 1,3-butadine and hydrogenating the resulting conjugated diene unit, as described for that in the aromatic vinyl-containing rubber. In other words, the thermoplastic elastomer containing a non-conjugated olefin unit may be a copolymer of a non-conjugated olefin and another monomer(s) or a hydrogenated product of a copolymer of a conjugated diene compound and another monomer(s) (hydrogenated copolymer).

From the standpoint of properties such as abrasion resistance, the thermoplastic elastomer preferably contains an aromatic vinyl unit.

The aromatic vinyl compound corresponding to the aromatic vinyl unit is as described above for the rubber component. Styrene or $\alpha$-methylstyrene is preferred, and styrene is more preferred. In other words, the aromatic vinyl unit is preferably a styrene unit.

The aromatic vinyl unit contents of the rubber component and the thermoplastic elastomer in the rubber compositions preferably satisfy the following relationship: Aromatic vinyl unit content (% by mass) of rubber component > Aromatic vinyl unit content (% by mass) of thermoplastic elastomer.

By satisfying the relationship, the polarity of the rubber phase is increased so that the dispersibility of silica in the rubber phase is improved, while the introduction of silica into the thermoplastic elastomer phase is reduced. Thus, it is believed that the difference in hardness between the rubber phase and the thermoplastic elastomer phase is increased, and the above-described stress concentration is further relaxed.

The aromatic vinyl unit content of the rubber component is preferably 5% by mass or higher, more preferably 10% by mass or higher, still more preferably 20% by mass or higher, particularly preferably 30% by mass or higher, but is preferably 50% by mass or lower, more preferably 45% by mass or lower, still more preferably 40% by mass or lower. When the aromatic vinyl unit content is within the range indicated above, the advantageous effect tends to be better achieved.

When the rubber component includes a plurality of rubbers (a combination of SBR having a styrene unit content of 10% by mass and BR, in which the amounts of the SBR and BR are 70% by mass and 30% by mass, respectively, based on 100% by mass of the rubber component), for example, the aromatic vinyl unit content of the rubber component is 7% by mass (= 70×0.1/100×100). This similarly applies to the thermoplastic elastomer described below.

The aromatic vinyl unit content of the thermoplastic elastomer is preferably 5% by mass or higher, more preferably 10% by mass or higher, still more preferably 20% by mass or higher, but is preferably 60% by mass or lower, more preferably 50% by mass or lower, still more preferably 40% by mass or lower, particularly preferably 30% by mass or lower. When the aromatic vinyl unit content is within the range indicated above, the advantageous effect tends to be better achieved.

From the standpoint of properties such as abrasion resistance, the thermoplastic elastomer is preferably a thermoplastic elastomer having a styrene block (styrene-based thermoplastic elastomer).

Specific examples of the styrene-based thermoplastic elastomer include styrene-vinylisoprene-styrene triblock copolymers (SIS), styrene-isobutylene diblock copolymers (SIB), styrene-butadiene-styrene triblock copolymers (SBS), styrene-ethylene/butylene-styrene triblock copolymers (SEBS), styrene-ethylene/propylene-styrene triblock copolymers (SEPS), styrene-ethylene/ethylene/propylene-styrene triblock copolymers (SEEPS), and styrene-butadiene/butylene-styrene triblock copolymers (SBBS). These may be used alone or in combinations of two or more. Among these, copolymers having a styrene block on both ends are preferred, and styrene-ethylene/propylene-styrene triblock copolymers (SEPS) or styrene-ethylene/butylene-styrene triblock copolymers (SEBS) are more preferred.

The thermoplastic elastomer may be commercially available from Kuraray Co., Ltd., Asahi Kasei Corporation, etc.

The amount of the thermoplastic elastomer per 100 parts by mass of the rubber component is preferably 5 parts by mass or more, more preferably 10 parts by mass or more, still more preferably 20 parts by mass or more, particularly preferably 25 parts by mass or more, but is preferably 90 parts by mass or less, more preferably 80 parts by mass or less, still more preferably 60 parts by mass or less, particularly preferably 40 parts by mass or less. When the amount is within the range indicated above, the advantageous effect tends to be better achieved.

The aromatic vinyl-containing rubber, the polybutadiene rubber, and the thermoplastic elastomer are preferably present in each of the rubber compositions in respective amounts satisfying the following relationship: Amount of aromatic vinyl-containing rubber (% by mass based on 100% by mass of rubber component) > Amount of polybutadiene rubber (% by mass based on 100% by mass of rubber component) > Amount of thermoplastic elastomer (parts by mass per 100 parts by mass of rubber component).

The satisfaction of the relationship means that the higher affinity it has for silica, the larger the amount. Thus, the dispersibility of silica in the rubber phase can be improved.

The rubber compositions contain a silica (fine particle silica) having a CTAB adsorption specific surface area of 180 m$^2$/g or more. The fine particle silica may be commercially available from Evonik, Rhodia, etc.

The CTAB adsorption specific surface area of the fine particle silica is preferably 190 m$^2$/g or more, more preferably 200 m$^2$/g or more, but is preferably 300 m$^2$/g or less, more preferably 260 m$^2$/g or less, still more preferably 240 m$^2$/g or less. When the CTAB adsorption specific surface area is within the range indicated above, the advantageous effect tends to be better achieved.

The CTAB adsorption specific surface area of the silica is measured as set forth in ASTM D3765-80.

From the standpoint of wet grip performance, the amount of the fine particle silica per 100 parts by mass of the rubber component is preferably 30 parts by mass or more, more preferably 50 parts by mass or more, still more preferably 70 parts by mass or more, particularly preferably 80 parts by mass or more, while from the standpoint of low heat build-up properties, it is preferably 150 parts by mass or less, more preferably 130 parts by mass or less, still more preferably 110 parts by mass or less.

The rubber compositions may contain other types of silica (silica having a CTAB adsorption specific surface area of less than 180 m$^2$/g) together with the fine particle silica.

The silica may be used in combination with a silane coupling agent.

Any silane coupling agent may be used, and examples include sulfide silane coupling agents such as bis(3-triethoxysilylpropyl)tetrasulfide, bis(2-triethoxysilyl-ethyl)tetrasulfide, bis(4-triethoxysilylbutyl)tetrasulfide, bis(3-trimethoxysilylpropyl)tetrasulfide, bis(2-trimethoxy-silylethyl)tetrasulfide, bis(2-triethoxysilylethyl)-trisulfide, bis(4-trimethoxysilylbutyl)trisulfide, bis(3-triethoxysilylpropyl)disulfide, bis(2-triethoxysilylethyl)-disulfide, bis(4-triethoxysilylbutyl)disulfide, bis(3-trimethoxysilylpropyl)disulfide, bis(2-trimethoxysilyl-ethyl)disulfide, bis(4-trimethoxysilylbutyl)disulfide, 3-trimethoxysilylpropyl-N,N-dimethylthiocarbamoyl tetrasulfide, 2-triethoxysilylethyl-N,N-dimethyl-thiocarbamoyl tetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Commercial products available from Evonik, Momentive, Shin-Etsu Silicone, Tokyo Chemical Industry Co., Ltd., AZmax. Co., Dow Corning Toray Co., Ltd., etc. may be used. These may be used alone or in combinations of two or more.

The amount of the silane coupling agent per 100 parts by mass of the silica (the combined amount of the fine particle silica and other types of silica) is preferably 4 parts by mass or more, more preferably 6 parts by mass or more, still more preferably 8 parts by mass or more, particularly preferably 10 parts by mass or more, but is preferably 15 parts by mass or less, more preferably 12 parts by mass or less. When the amount is within the range indicated above, the advantageous effect tends to be better achieved.

The rubber compositions preferably contain an aromatic ring-containing resin component which contains an aromatic ring structure such as styrene or phenol. This provides better properties such as abrasion resistance.

The aromatic ring-containing resin component may be commercially available from Arizona Chemical, Yasuhara Chemical Co., Ltd., etc.

The term "aromatic ring-containing resin component" refers to a polymer formed from a monomer containing an aromatic ring structure such as a benzene ring and is usually solid at room temperature (25°C).

Examples of the aromatic ring-containing resin component include styrene resins, phenol resins, naphthol resins, and coumarone-indene resins. These may be used alone or in combinations of two or more. Styrene resins are preferred among these.

Styrene resins refer to polymers formed from styrenic monomers, and examples include polymers polymerized from styrenic monomers as main components (at least 50% by mass). Specific examples include homopolymers polymerized from single styrenic monomers (e.g., styrene, o-methylstyrene, m-methylstyrene, p-methylstyrene, α-methylstyrene, p-methoxystyrene, p-tert-butylstyrene, p-phenylstyrene, o-chlorostyrene, m-chlorostyrene, p-chlorostyrene), copolymers copolymerized from two or more styrenic monomers, and copolymers of styrenic monomers with additional monomers copolymerizable therewith.

Examples of such additional monomers include acrylonitriles such as acrylonitrile and methacrylonitrile; unsaturated carboxylic acids such as acrylic acid and methacrylic acid; unsaturated carboxylic acid esters such as methyl acrylate and methyl methacrylate; conjugated dienes such as terpene compounds, chloroprene, butadiene, and isoprene; olefins such as 1-butene and 1-pentene; and α,β-unsaturated carboxylic acids and acid anhydrides thereof such as maleic anhydride. These may be used alone or in combinations of two or more.

From the standpoint of properties such as abrasion resistance, α-methylstyrene resins (e.g., α-methylstyrene homopolymer, copolymers of α-methylstyrene and styrene) are preferred among other styrene resins, with copolymers of α-methylstyrene and styrene being more preferred.

The aromatic ring structure contents of the aromatic ring-containing resin component, the rubber component, and the thermoplastic elastomer in the rubber compositions preferably satisfy the following relationship: Aromatic ring structure content of aromatic ring-containing resin component > Aromatic ring structure content of rubber component > Aromatic ring structure content of thermoplastic elastomer.

The satisfaction of the relationship means that the aromatic ring-containing resin component and the rubber component have a higher polarity than the thermoplastic elastomer, and therefore silica is less likely to be incorporated into the thermoplastic elastomer. Thus, it is believed that the flexibility of the thermoplastic elastomer phase is enhanced, and the above-described stress concentration is further relaxed.

The aromatic ring structure content of the aromatic ring-containing resin component is preferably 5% by mass or higher, more preferably 10% by mass or higher, still more preferably 15% by mass or higher, further preferably 30% by mass or higher, particularly preferably 50% by mass or higher, but is preferably 90% by mass or lower, more preferably 70% by mass or lower, still more preferably 65% by mass or lower. When the aromatic ring structure content is within the range indicated above, the advantageous effect tends to be better achieved.

When the aromatic ring-containing resin component includes a plurality of resins (a combination of resin A having an aromatic ring structure content of 10% by mass and resin B having an aromatic ring structure content of 20% by mass, in which the amounts of the resin A and resin B are 10 parts by mass and 10 parts by mass, respectively, per 100 parts by mass of the rubber component), for example, the aromatic ring structure content of the aromatic ring-containing resin component is 15% by mass (= $(10 \times 0.1 + 10 \times 0.2)/20 \times 100$). This similarly applies to the rubber component and thermoplastic elastomer described below.

The aromatic ring structure content of the rubber component is preferably 3.75% by mass or higher, more preferably 8.75% by mass or higher, still more preferably 13.75% by mass or higher, particularly preferably 18.75% by mass or higher, but is preferably 37.5% by mass or lower, more preferably 32.5% by mass or lower, still more preferably 27.5% by mass or lower. When the aromatic ring structure content is within the range indicated above, the advantageous effect tends to be better achieved.

The aromatic ring structure content of the thermoplastic elastomer is preferably 3.75% by mass or higher, more preferably 8.75% by mass or higher, still more preferably 13.75% by mass or higher, but is preferably 45% by mass or lower, more preferably 40% by mass or lower, still more preferably 35% by mass or lower, particularly preferably 30% by mass or lower. When the aromatic ring structure content is within the range indicated above, the advantageous effect tends to be better achieved.

The aromatic ring structure content may be calculated from the results of $^1$H-NMR analysis.

The softening point of the aromatic ring-containing resin component is preferably 50°C or higher, more preferably 70°C or higher, still more preferably 85°C or higher, but is preferably 120°C or lower, more preferably 100°C or lower. When the softening point is within the range indicated above, the advantageous effect tends to be better achieved.

The softening point of the resins is determined as set forth in JIS K 6220-1:2001 using a ring and ball softening point measuring apparatus and defined as the temperature at which the ball drops down.

From the standpoint of wet grip performance, the amount of the aromatic ring-containing resin component per 100 parts by mass of the rubber component is preferably 5 parts by mass or more, more preferably 10 parts by mass or more, still more preferably 15 parts by mass or more, particularly preferably 20 parts by mass or more, while from the standpoint of processability, it is preferably 50 parts by mass or less, more preferably 40 parts by mass or less, still more preferably 35 parts by mass or less.

The rubber compositions may contain a resin component other than the aromatic ring-containing resin component, including, for example, dicyclopentadiene resins and C5 resins. This resin component is also usually solid at room temperature (25°C).

From the standpoint of wet grip performance, the amount of the resin component other than the aromatic ring-containing resin component per 100 parts by mass of the rubber component is preferably 5 parts by mass or more, more preferably 10 parts by mass or more, still more preferably 15 parts by mass or more, particularly preferably 20 parts by mass or more, while from the standpoint of processability, it is preferably 50 parts by mass or less, more preferably 40 parts by mass or less, still more preferably 35 parts by mass or less.

The rubber compositions preferably contain a plasticizer. This can improve dispersion of silica in the rubber phase.

The plasticizer is usually liquid at room temperature (25°C). Examples include oils, liquid resins, and liquid diene polymers. These may be used alone or in combinations of two or more. Oils are preferred among these.

Examples of the oil include process oils, vegetable oils, and mixtures thereof. Examples of the process oils include paraffinic process oils, aromatic process oils, and naphthenic process oils. Examples of the vegetable oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. Commercial products available from Idemitsu Kosan Co., Ltd., Sankyo Yuka Kogyo K.K., ENEOS Corporation, Olisoy, H&R, Hokoku Corporation, Showa Shell Sekiyu K.K., Fuji Kosan Co., Ltd., etc. may be used.

From the standpoint of processability, the amount of the plasticizer per 100 parts by mass of the rubber component is preferably 5 parts by mass or more, more preferably 10 parts by mass or more, still more preferably 15 parts by mass or more, particularly preferably 25 parts by mass or more, while from the standpoint of handling stability, it is preferably 70 parts by mass or less, more preferably 50 parts by mass or less.

The plasticizer and the thermoplastic elastomer are preferably present in each of the rubber compositions in respective amounts satisfying the following relationship: Amount of plasticizer (parts by mass per 100 parts by mass of rubber component) > Amount of thermoplastic elastomer (parts by mass per 100 parts by mass of rubber component).

By satisfying the relationship, the incorporation of the plasticizer into the thermoplastic elastomer is reduced so that the plasticizer can sufficiently achieve the effect of promoting dispersion of silica.

The rubber compositions may contain carbon black.

Any carbon black may be used, and examples include N134, N110, N220, N234, N219, N339, N330, N326, N351, N550, and N762. Commercial products available from Asahi Carbon Co., Ltd., Cabot Japan K.K., Tokai Carbon Co., Ltd., Mitsubishi Chemical Corporation, Lion Corporation, NSCC Carbon Co., Ltd., Columbia Carbon, etc. may be used. These may be used alone or in combinations of two or more.

From the standpoint of abrasion resistance, the nitrogen adsorption specific surface area ($N_2SA$) of the carbon black is preferably 35 $m^2/g$ or more, more preferably 60 $m^2/g$ or more, still more preferably 100 $m^2/g$ or more, particularly preferably 110 $m^2/g$ or more, while from the standpoint of low heat build-up properties, it is preferably 200 $m^2/g$ or less, more preferably 150 $m^2/g$ or less, still more preferably 130 $m^2/g$ or less, particularly preferably 120 $m^2/g$ or less.

The $N_2SA$ of the carbon black is measured in accordance with JIS K6217-2:2001.

From the standpoint of reinforcement, the amount of the carbon black per 100 parts by mass of the rubber component is preferably 3 parts by mass or more, more preferably 5 parts by mass or more, still more preferably 10 parts by mass or more, while from the standpoint of low heat build-up properties, it is preferably 70 parts by mass or less, more preferably 50 parts by mass or less, still more preferably 35 parts by mass or less.

The rubber compositions may contain sulfur.

Examples of the sulfur include those commonly used in the rubber industry, such as powdered sulfur, precipitated sulfur, colloidal sulfur, insoluble sulfur, highly dispersible sulfur, and soluble sulfur. Commercial products available from Tsurumi Chemical Industry Co., Ltd., Karuizawa Sulfur Co., Ltd., Shikoku Chemicals Corporation, Flexsys, Nippon Kanryu Industry Co., Ltd., Hosoi Chemical Industry Co., Ltd., etc. may be used. These may be used alone or in combinations of two or more.

The amount of the sulfur per 100 parts by mass of the rubber component is preferably 0.5 parts by mass or more, more preferably 1.5 parts by mass or more, but is preferably 6 parts by mass or less, more preferably 4 parts by mass or less. When the amount is within the range indicated above, the advantageous effect tends to be better achieved.

The rubber compositions may contain a vulcanization accelerator.

Examples of the vulcanization accelerator include thiazole vulcanization accelerators such as 2-mercaptobenzothiazole and di-2-benzothiazolyl disulfide; thiuram vulcanization accelerators such as tetramethylthiuram disulfide (TMTD), tetrabenzylthiuram disulfide (TBzTD), and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Commercial products available from Sumitomo Chemical Co., Ltd., Ouchi Shinko Chemical Industrial Co., Ltd., etc. may be used. These may be used alone or in combinations of two or more.

The amount of the vulcanization accelerator per 100 parts by mass of the rubber component is preferably 1.5 parts by mass or more, more preferably 3 parts by mass or more, but is preferably 6 parts by mass or less, more preferably 4 parts by mass or less, still more preferably 3.8 parts by mass or less. When the amount is within the range indicated above, the advantageous effect tends to be better achieved.

The rubber compositions may contain zinc oxide.

The zinc oxide may be a conventional one. Commercial products available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. may be used. These may be used alone or in combinations of two or more.

The amount of the zinc oxide per 100 parts by mass of the rubber component is preferably 1 part by mass or more, more preferably 2 parts by mass or more, still more preferably 3 parts by mass or more, but is preferably 8 parts by mass or less, more preferably 6 parts by mass or less. When the amount is within the range indicated above, the advantageous effect tends to be better achieved.

The rubber compositions may contain a wax.

Any wax may be used, and examples include petroleum waxes such as paraffin waxes and microcrystalline waxes; naturally-occurring waxes such as plant waxes and animal waxes; and synthetic waxes such as polymers of ethylene, propylene, or other similar monomers. Commercial products available from Ouchi Shinko Chemical Industrial Co., Ltd., Nippon Seiro Co., Ltd., Seiko Chemical Co., Ltd., etc. may be used. These may be used alone or in combinations of two or more.

The amount of the wax per 100 parts by mass of the rubber component is preferably 1 part by mass or more, more preferably 2 parts by mass or more, but is preferably 6 parts by mass or less, more preferably 4 parts by mass or less. When the amount is within the range indicated above, the advantageous effect tends to be better achieved.

The rubber compositions may contain an antioxidant.

Examples of the antioxidant include naphthylamine antioxidants such as phenyl-α-naphthylamine; diphenylamine antioxidants such as octylated diphenylamine and 4,4'-bis(α,α'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as 2,2,4-trimethyl-1,2-dihydroquinoline polymer; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Commercial products available from Seiko Chemical Co., Ltd., Sumitomo Chemical Co., Ltd., Ouchi Shinko Chemical Industrial Co., Ltd., Flexsys, etc. may be used. These may be used alone or in combinations of two or more.

The amount of the antioxidant per 100 parts by mass of the rubber component is preferably 1 part by mass or more, more preferably 2 parts by mass or more, but is preferably 6 parts by mass or less, more preferably 4 parts by mass or less. When the amount is within the range indicated above, the advantageous effect tends to be better achieved.

The rubber compositions may contain stearic acid.

The stearic acid may be a conventional one. Commercial products available from NOF Corporation, Kao Corporation, FUJIFILM Wako Pure Chemical Corporation, Chiba Fatty Acid Co., Ltd., etc. may be used. These may be used alone or in combinations of two or more.

The amount of the stearic acid per 100 parts by mass of the rubber component is preferably 1 part by mass or more, more preferably 2 parts by mass or more, but is preferably 6 parts by mass or less, more preferably 4 parts by mass or less. When the amount is within the range indicated above, the advantageous effect tends to be better achieved.

In addition to the above-described components, the rubber compositions may further contain additives commonly used in the rubber industry, such as organic peroxides. The amount of each of such additives is preferably 0.1 to 200 parts by mass per 100 parts by mass of the rubber component.

The rubber compositions may be prepared, for example, by kneading the components using a rubber kneading machine such as an open roll mill or a Banbury mixer, and then vulcanizing the kneaded mixture.

The kneading conditions are as follows. In a base kneading step of kneading additives other than sulfur and vulcanization accelerators, the kneading temperature is usually 100 to 180°C, preferably 120 to 170°C. In a final kneading step of kneading sulfur and vulcanization accelerators, the kneading temperature is usually 120°C or lower, preferably 85 to 110°C. The composition obtained after kneading sulfur and vulcanization accelerators is usually vulcanized by press vulcanization, for example. The vulcanization temperature is usually 140 to 190°C, preferably 150 to 185°C. The vulcanization time is usually 5 to 15 minutes.

The rubber compositions are suitable for use in treads (cap treads) of tires, for example.

The tires (e.g., pneumatic tires) of the present invention may be produced from the above-described rubber compositions by usual methods. Specifically, an unvulcanized rubber composition as described above may be extruded into the shape of a tire component such as a tread and then assembled with other tire components in a usual manner in a tire building machine to build an unvulcanized tire, which may then be heated and pressurized in a vulcanizer to produce a tire.

The tires may be used as tires for passenger vehicles, large passenger vehicles, large SUVs, light trucks, trucks and buses (heavy duty tires), or motorcycles, or as racing tires (high performance tires) or other similar tires. The tires can also be used as all-season tires, summer tires, studless winter tires (winter tires, cold weather tires), or other similar tires. Further, the tires can also be used as run-flat tires, sponge-equipped tires, self-sealing tires, electronic component-equipped tires, airless tires, or other similar tires.

EXAMPLES

The present invention will be specifically described with reference to, but not limited to, examples.

The chemicals used in the examples and comparative examples are listed below.

Thermoplastic elastomer 1: HYBRAR 7125 (SEPS (hydrogenated SIS), styrene unit: 20% by mass, aromatic ring structure: 15% by mass) available from Kuraray Co., Ltd.

Thermoplastic elastomer 2: Tuftec H1043 (SEBS (hydrogenated SBS), styrene unit: 67% by mass, aromatic ring structure: 50% by mass) available from Asahi Kasei Corporation

SBR 1: SBR (styrene unit: 40% by mass, aromatic ring structure: 30% by mass, 1,3-butadiene unit: 60% by mass) produced in Production Example 1 described below

SBR 2: hydrogenated SBR (styrene unit: 30% by mass, aromatic ring structure: 23% by mass, 1,3-butadiene unit (before hydrogenation): 70% by mass, degree of hydrogenation: 80 mol%) produced in Production Example 2 described below

BR: BR150B available from Ube Industries, Ltd.

Silica 1: 9100Gr (CTAB adsorption specific surface area: 203 $m^2/g$) available from Evonik

Silica 2: Nipsil AQ (CTAB adsorption specific surface area: 155 $m^2/g$) available from Tosoh Silica Corporation

Silane coupling agent: Si69 (bis(3-triethoxysilylpropyl)tetrasulfide) available from Evonik

Carbon black: DIABLACK N220 ($N_2SA$: 114 $m^2/g$) available from Mitsubishi Chemical Corporation

Oil: Diana Process NH-70S (aromatic process oil) available from Idemitsu Kosan Co., Ltd.

Resin 1: Sylvatraxx 4401 (a-methylstyrene resin (copolymer of $\alpha$-methylstyrene and styrene), aromatic ring structure: 65% by mass, softening point: 85°C) available from Arizona Chemical

Resin 2: HA125 (hydrogenated dicyclopentadiene resin, aromatic ring structure: 0% by mass, softening point: 124.5°C) available from ENEOS Corporation

Zinc oxide: zinc oxide #1 available from Mitsui Mining & Smelting Co., Ltd.

Antioxidant: NOCRAC 6C (N-(1,3-dimethylbutyl)-N'-phenyl-p-phenylenediamine) available from Ouchi Shinko Chemical Industrial Co., Ltd.

Stearic acid: stearic acid "TSUBAKI" available from NOF Corporation

Wax: Ozoace 0355 available from Nippon Seiro Co., Ltd.

Sulfur: powdered sulfur available from Tsurumi Chemical Industry Co., Ltd.

Vulcanization accelerator 1: NOCCELER CZ (N-cyclohexyl-2-benzothiazolylsulfenamide) available from Ouchi Shinko Chemical Industrial Co., Ltd.

Vulcanization accelerator 2: NOCCELER D (1,3-diphenylguanidine) available from Ouchi Shinko Chemical Industrial Co., Ltd.

(Production Example 1: Production of SBR 1)

A sufficiently nitrogen-purged heat-resistant reaction vessel was charged with n-hexane, styrene, 1,3-butadiene, N,N,N',N'-tetramethylethylenediamine (TMEDA), and n-butyllithium, followed by stirring at 50°C for five hours to cause a polymerization reaction. Then, the reaction was stopped by adding alcohol. To the reaction solution was added 2,6-di-tert-butyl-p-cresol, followed by purification by reprecipitation to give SBR 1.

(Production Example 2: Production of SBR 2)

A sufficiently nitrogen-purged heat-resistant reaction vessel was charged with n-hexane, styrene, 1,3-butadiene, TMEDA, and n-butyllithium, followed by stirring at 50°C for five hours to cause a polymerization reaction. Next, the reaction solution was stirred for 20 minutes while supplying hydrogen gas at a pressure of 0.4 MPa gauge to react the unreacted polymer terminal lithium with hydrogen into lithium hydride. Hydrogenation was performed using a titanocene dichloride-based catalyst at a hydrogen gas supply pressure of 0.7 MPa gauge and a reaction temperature of 90°C. Once the cumulative amount of absorbed hydrogen reached the amount corresponding to the target degree of hydrogenation, the reaction temperature was brought to room temperature, and the hydrogen pressure was returned to an ordinary pressure. Then, the reaction solution was drawn from the reaction vessel and introduced into water with stirring. The solvent was removed by steam stripping to give SBR 2.

(Examples and Comparative Examples)

The materials other than the sulfur and vulcanization accelerators in the formulation amounts shown in Table 1 were kneaded in a 1.7 L Banbury mixer (Kobe Steel, Ltd.) for five minutes and then discharged at 150°C to give a kneaded mixture. Then, the sulfur and vulcanization accelerators were added to the kneaded mixture, and they were kneaded in an open roll mill at 80°C for five minutes to give an unvulcanized rubber composition. The unvulcanized rubber composition was formed into the shape of a tread and assembled with other tire components in a tire building machine to build an unvulcanized tire. The unvulcanized tire was vulcanized at 170°C for 10 minutes to prepare a test tire (size: 195/65R15).

The test tires prepared as above were evaluated for the following items. Table 1 shows the results.

(Wet grip performance)

The test tires of each example were mounted on a car. The braking distance of the car with an initial speed of 80 km/h on wet asphalt was determined and expressed as an index relative to Comparative Example 3 (= 100). A higher index indicates a shorter braking distance and therefore better wet grip performance.

(Abrasion resistance)

The test tires of each example were mounted on a car, and the car ran for 50,000 km. Then, the depth of the grooves in the tread portion was measured to calculate the abrasion loss of the tread portion. The abrasion losses are expressed as an index relative to Comparative Example 3 (= 100). A higher index indicates a lower abrasion loss and therefore better abrasion resistance.

[Table 1]

| | | Example | | | | | | | Comparative Example | | | | | | |
|---|---|---|---|---|---|---|---|---|---|---|---|---|---|---|---|
| | | 1 | 2 | 2 | 3 | 4 | 5 | 6 | 1 | 2 | 3 | 4 | 5 | 6 | 7 |
| Formulation (parts by mass) | Thermoplastic elastomer 1 | | | 25 | 25 | 25 | 25 | 10 | | | | 25 | 25 | 25 | 10 |
| | Thermoplastic elastomer 2 | 25 | 25 | | | | | | 25 | | | | | | |
| | SBR 1 | 80 | | 80 | 80 | 70 | | 70 | 80 | 80 | 80 | 80 | 80 | 70 | 70 |
| | SBR 2 | | 80 | | | | 70 | | | | | | | | |
| | BR | 20 | 20 | 20 | 20 | 30 | 30 | 30 | 20 | 20 | 20 | 20 | 20 | 30 | 30 |
| | Silica 1 | 80 | 80 | 80 | 80 | 80 | 80 | 80 | | 80 | | | | | |
| | Silica 2 | | | | | | | | 80 | | 80 | 80 | 80 | 80 | 80 |
| | Silane coupling agent | 8 | 8 | 8 | 8 | 8 | 8 | 8 | 8 | 8 | 8 | 8 | 8 | 8 | 8 |
| | Carbon black | 10 | 10 | 10 | 10 | 10 | 10 | 10 | 10 | 10 | 10 | 10 | 10 | 10 | 10 |
| | Oil | 11.25 | 11.25 | 11.25 | 11.25 | 15 | 15 | 30 | 11.25 | 36.25 | 36.25 | 11.25 | 11.25 | 15 | 30 |
| | Resin 1 | | | | 10 | 10 | 10 | 10 | | | | | 10 | 10 | 10 |
| | Resin 2 | 10 | 10 | 10 | | | | | 10 | 10 | 10 | 10 | | | |
| | Zinc oxide | 3 | 3 | 3 | 3 | 3 | 3 | 3 | 3 | 3 | 3 | 3 | 3 | 3 | 3 |
| | Antioxidant | 2 | 2 | 2 | 2 | 2 | 2 | 2 | 2 | 2 | 2 | 2 | 2 | 2 | 2 |
| | Stearic acid | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 2 | 2 | 2 | 2 | 2 | 2 | 2 | 2 | 2 | 2 | 2 | 2 | 2 | 2 |
| | Total | 258.55 | 258.55 | 258.55 | 258.55 | 262.30 | 262.30 | 262.30 | 258.55 | 258.55 | 258.55 | 258.55 | 258.55 | 262.30 | 262.30 |
| Evaluation | Wet grip performance index | 143 | 138 | 125 | 132 | 120 | 115 | 117 | 130 | 110 | 100 | 110 | 115 | 90 | 110 |
| | Abrasion resistance index | 112 | 116 | 115 | 118 | 125 | 129 | 128 | 100 | 110 | 100 | 100 | 100 | 110 | 100 |

12

Table 1 shows that the examples exhibited excellent abrasion resistance as compared to the comparative examples.

Moreover, in the examples, good wet grip performance was also exhibited, and the overall performance in terms of abrasion resistance and wet grip performance (the sum of the indices) was improved as compared to the comparative examples.

The present invention provides rubber compositions which provide improved abrasion resistance, and tires including the rubber compositions. Provided are rubber compositions containing a rubber component, a thermoplastic elastomer containing a non-conjugated olefin unit, and a silica having a cetyltrimethylammonium bromide adsorption specific surface area of 180 $m^2$/g or more.

**Claims**

1. A tire, comprising a rubber composition,
   the rubber composition comprising:

   a rubber component;
   a thermoplastic elastomer containing a non-conjugated olefin unit; and
   a silica having a cetyltrimethylammonium bromide adsorption specific surface area of 180 $m^2$/g or more.

2. The tire according to claim 1,
   wherein the rubber component and the thermoplastic elastomer each contain an aromatic vinyl unit, and
   aromatic vinyl unit contents of the rubber component and the thermoplastic elastomer satisfy the following relationship:

   ```
   Aromatic vinyl unit content of rubber component > Aromatic
   vinyl unit content of thermoplastic elastomer.
   ```

3. The tire according to claim 1 or 2,
   wherein the rubber component comprises polybutadiene rubber and an aromatic vinyl-containing rubber which contains an aromatic vinyl unit, and
   the aromatic vinyl-containing rubber, the polybutadiene rubber, and the thermoplastic elastomer are present in the rubber composition in respective amounts satisfying the following relationship:

   ```
   Amount of aromatic vinyl-containing rubber > Amount of
   polybutadiene rubber > Amount of thermoplastic elastomer.
   ```

4. The tire according to claim 3,
   wherein the aromatic vinyl-containing rubber contains a non-conjugated olefin unit.

5. The tire according to claim 3 or 4,
   wherein the aromatic vinyl-containing rubber has an aromatic vinyl unit content of 35% by mass or higher.

6. The tire according to any one of claims 2 to 5,
   wherein the aromatic vinyl unit is a styrene unit.

7. The tire according to any one of claims 1 to 6,
   wherein the rubber composition further comprises an aromatic ring-containing resin component which contains an aromatic ring structure, and
   aromatic ring structure contents of the aromatic ring-containing resin component, the rubber component, and the thermoplastic elastomer satisfy the following relationship:

Aromatic ring structure content of aromatic ring-containing resin component > Aromatic ring structure content of rubber component > Aromatic ring structure content of thermoplastic elastomer.

8. The tire according to any one of claims 1 to 7,
wherein the rubber composition further comprises a plasticizer, and
the plasticizer and the thermoplastic elastomer are present in the rubber composition in respective amounts satisfying the following relationship:

Amount of plasticizer > Amount of thermoplastic elastomer.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H2147647 A